# EUROPÄISCHE PATENTSCHRIFT

(11) **EP 1 231 111 B1**
(45) Veröffentlichungstag und Bekanntmachung des Hinweises auf die Patenterteilung: **25.08.2004**
(21) Anmeldenummer: 01128000.5
(22) Anmeldetag: 24.11.2001
(51) Int. Cl.: B60R 7/06

(54) **Anordnung eines Ablagefachs im Armaturenbrett eines Kraftfahrzeugs**
Arrangement of a storage compartment in the dashboard of a motor vehicle
Agencement d'un réceptacle de rangement dans le tableau de bord d'un véhicule

(30) Priorität: 10.02.2001 DE 10106154
(43) Veröffentlichungstag der Anmeldung: 14.08.2002
(73) Patentinhaber: Volkswagen Aktiengesellschaft, 38436 Wolfsburg (DE)
(72) Erfinder: Emmerich, Richard, 38557 Osloss (DE)
(74) Vertreter: Basfeld, Rainer, Dr. Dipl.-Phys.

(56) Entgegenhaltungen:
- DE-A- 1 430 810
- DE-A- 1 430 829
- DE-A- 19 807 317
- DE-A- 19 927 504
- GB-A- 2 032 360
- GB-A- 2 079 689
- US-A- 5 639 116
- PATENT ABSTRACTS OF JAPAN vol. 1999, no. 13, 30. November 1999 (1999-11-30) -& JP 11 222053 A (SHIGERU CO LTD), 17. August 1999 (1999-08-17)
- PATENT ABSTRACTS OF JAPAN vol. 1999, no. 08, 30. Juni 1999 (1999-06-30) -& JP 11 078704 A (HONDA MOTOR CO LTD), 23. März 1999 (1999-03-23)
- PATENT ABSTRACTS OF JAPAN vol. 1995, no. 08, 29. September 1995 (1995-09-29) -& JP 07 112651 A (NISSAN MOTOR CO LTD), 2. Mai 1995 (1995-05-02)
- PATENT ABSTRACTS OF JAPAN vol. 1998, no. 03, 27. Februar 1998 (1998-02-27) -& JP 09 286281 A (SUZUKI MOTOR CORP), 4. November 1997 (1997-11-04)

## Beschreibung

Die vorliegende Erfindung betrifft eine Anordnung eines Ablagefachs im Armaturenbrett eines Kraftfahrzeugs, wobei an dem Armaturenbrett des Kraftfahrzeugs mindestens ein Anzeigeninstrument angeordnet ist, und wobei oberhalb des mindestens einen Anzeigeinstrumentes an dem Armaturenbrett eine Instrumentenhutze ausgebildet ist, wobei das Ablagefach zumindest abschnittsweise in die Instrumentenhutze integriert ist.

Den gattungsbildenden Druckschriften US 5,639,116 A und DE 14 30 829 A sind Anordnungen eines Ablagefaches im Armaturenbrett eines Kraftfahrzeuges zu entnehmen. Das zumindest teilweise in die Instrumentenhutze integrierte Ablagefach erstreckt sich vom Fahrzeuginnenraum ausgehend horizontal in Richtung der Windschutzscheibe. Die Öffnung des Ablagefachs ist auf der dem Fahrer zugewandten Seite des Armaturenbrettes vorgesehen.

Die DE 14 30 810 A offenbart eine Anordnung eines Ablagefaches auf einem Armaturenbrett in Form eines auf dem Armaturenbrett aufgesetzten Behälter, der sich fast über die ganze Breite des Armaturenbrettes erstreckt.

Der Druckschrift GB 2 032 360 A ist eine Armaturenbrettanordnung zu entnehmen, die ein sich in Form einer Leiste erstreckendes Armaturenbrett umfasst, das parallel zur Windschutzscheibe eines Kraftfahrzeugs angeordnet ist. Zwischen dem Armaturenbrett und der Windschutzscheibe ist ein rahmenartiger Längsträger angeordnet, an dem eine Abdeckschicht aus Kunststoff angeordnet ist. Die Abdeckschicht weist zwei symmetrisch angeordnete Vertiefungen auf, die als zwei Ablagefächer ausgeführt sind.

Der Druckschrift JP 11222053 A ist eine in das Armaturenbrett integrierte Dosenhalteröffnung zu entnehmen. In der DE 199 27 504 A1 ist ein sich über die Fahrzeugbreite erstreckendes Cockpitmodul beschrieben, welches Abdeckplatten aufweist, die mit durch Eindrückungen gewonnenen Ablagen versehen sind.

Aus der Druckschrift JP 11078704 A ist ein Armaturenbrett bekannt, das auf seiner der Windschutzscheibe zugewandten Seite Vertiefungen aufweist, die durch eine ausschwenkbare Klappe abgedeckt sind. Der Druckschrift JP 07112651 A ist eine in das Armaturenbrett integrierte Getränkedosenhalterung zu entnehmen, die durch eine Klappe verschließbar ist.

In den Druckschriften JP 09286281 A und GB 2 079 689 A ist ein in das Armaturenbrett integriertes Ablagefach offenbart, das mit einer Klappe verschließbar ist.

Die Druckschrift DE 198 07 317 A1 beschreibt eine Instrumententafel, die eine über einem in der Instrumententafel angeordneten Kombiinstrument angeordnete dachartig vorspringende Instrumentenhutze aufweist.

Aus der deutschen Patentschrift DE 197 27 690 C2 ist eine Anordnung bekannt, bei der sich das Ablagefach neben der Instrumentenhutze etwa in der Mitte des Armaturenbrettes im Bereich einer Luftaustrittsdüse befindet.

Als nachteilig bei dem zuvor genannten Stand der Technik erweist sich, dass der von der als aus dem Armaturenbrett herausragendes Teil ausgeformten Instrumentenhutze umschlossene Raum nicht optimal ausgenutzt wird. Insbesondere in sehr kleinen kompakten Kraftfahrzeugen erweist es sich als ausgesprochen sinnvoll, keinen nutzbaren Raum im Bereich der Innenverkleidungen zu verschwenden.

Das der vorliegenden Erfindung zugrundeliegende Problem ist daher die Schaffung einer Anordnung der eingangs genannten Art, bei der das Ablagefach platzsparend angeordnet ist.

Dies wird erfindungsgemäß dadurch erreicht, dass sich das Ablagefache von der Oberseite der das mindestens eine Anzeigeinstrument oben überragenden Instrumentenhutze als Aussparung in dem Armaturenbrett in dieses hinein erstreckt. Da Instrumentenhutzen in der Regel Anformungen an dem Armaturenbrett sind, die das oder die Anzeigeninstrumente oben überragen, um beispielsweise einen Blendschutz darzustellen, können sich von oben Aussparungen in sie hinein erstrecken, ohne dass dabei die Funktion der Instrumentenhutze beeinträchtigt wird. Auf diese Weise wird der durch die Instrumentenhutze eingenommene Raum des Armaturenbrettes sinnvoll durch das Vorsehen eines Ablagefaches genutzt.

Hierbei kann sich die Instrumentenhutze nach oben und/oder in Richtung auf den Innenraum des Kraftfahrzeugs ein Stück weit von dem Armaturenbrett wegerstrecken. Insbesondere bei derartig ausgebildeten Instrumentenhutzen kann durch die Integration eines Ablagefaches ein relativ großer Raum für die Nutzung gewonnen werden.

Insbesondere kann sich das Ablagefach hierbei von der Oberseite der Instrumentenhutze nach unten und/oder in Richtung auf die Frontscheibe des Kraftfahrzeuges in das Armaturenbrett hinein erstrecken. Es zeigt sich, dass insbesondere bei den momentan in Kraftfahrzeugen eingebauten Armaturenbrettern in einer Richtung schräg nach unten und in Richtung auf die Frontscheibe ausreichend Freiraum vorhanden ist, der als Armaturenbrett genutzt werden kann. Unter Umständen muss hier noch ein bei manchen Armaturenbrettern in Querrichtung des Kraftfahrzeugs verlaufender Lüftungskanal am oberen frontseitigen Ende des Ablagefaches berücksichtigt werden.

Vorteilhafterweise umfasst die Anordnung eine Klappe, die das Ablagefach verschließen kann. Alternativ dazu besteht natürlich auch die Möglichkeit, eine erfindungsgemäße Anordnung ohne obere Klappe für das Ablagefach zu versehen.

Hierbei kann die Klappe an dem Armaturenbrett vermittels eines vorzugsweise als Klappenscharnier ausgeführten Schwenkmittels angelenkt sein. Alternativ besteht natürlich auch die Möglichkeit, andere Verschlussmechanismen für die Klappe vorzusehen, wie beispielsweise Schiebemechanismen oder dergleichen.

Vorzugsweise ist die Klappe derart an dem Armaturenbrett angelenkt, dass durch Verschwenken der Klappe in Richtung auf die Frontscheibe das Ablagefach geöffnet werden kann. Dadurch wird die Klappe nach dem Öffnen des Ablagefachs den Benutzer bei dem Zugriff auf das Ablagefach nicht behindern.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: einen schematischen Querschnitt durch eine erfindungsgemäße Anordnung mit einem Armaturenbrett und einer Frontscheibe eines Kraftfahrzeugs;
- Fig. 2: einen Fig. 1 entsprechenden Querschnitt mit geöffneter Klappe des Ablagefachs.

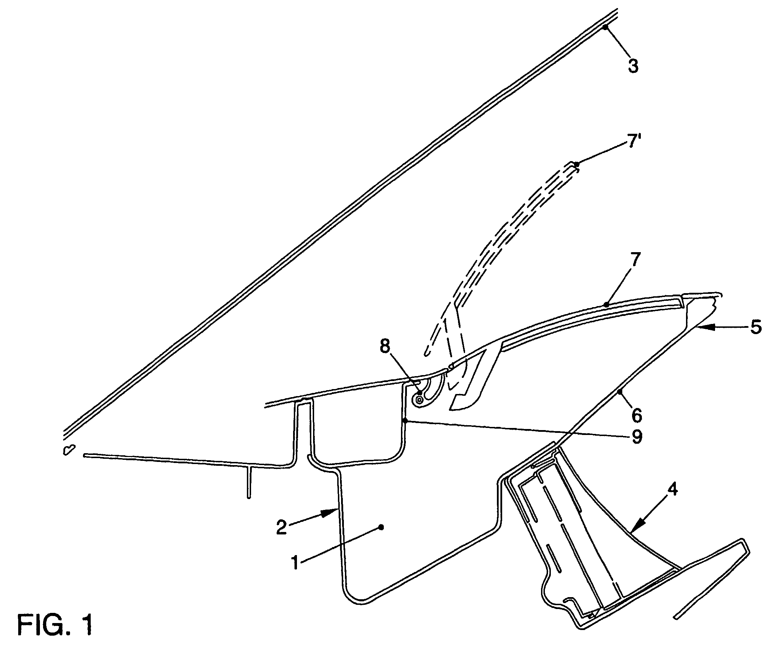

Wie aus Fig. 1 ersichtlich ist, umfasst eine erfindungsgemäße Anordnung ein Ablagefach 1, das in dem Armaturenbrett 2 eines Kraftfahrzeuges untergebracht ist. In Fig. 1 ist weiterhin zur besseren Orientierung auch die Frontscheibe 3 des Kraftfahrzeugs abgebildet.

Weiterhin ergibt sich aus der Schnittdarstellung gemäß Fig. 1 ein Anzeigeinstrument 4, das auf seiner Oberseite von einer Instrumentenhutze 5 überragt wird, die sich in dem abgebildeten Ausführungsbeispiel im Bereich des oder der Anzeigeninstrumente 4 etwas nach oben und nach vorne in den Innenraum des Kraftfahrzeugs hineinerstreckt. Die Instrumentenhutze 5 weist auf ihrer Unterseite eine sich bis zu dem Anzeigeinstrument 4 erstreckende Instrumentenblende 6 auf.

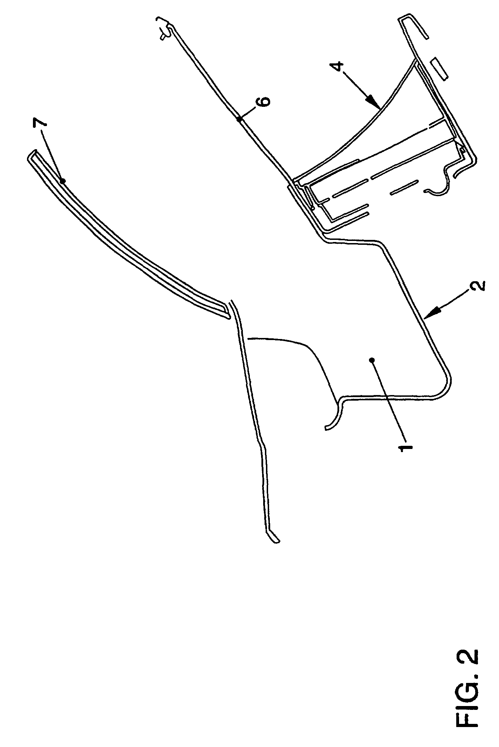

Das Ablagefach 1 ist zumindest abschnittsweise in die Instrumentenhutze 5 integriert, d.h. der durch die Ausformung der Instrumentenhutze 5 entstehende zusätzliche Raum im Inneren des Armaturenbretts 2 wird erfindungsgemäß als Ablagefach 1 genutzt. Dafür ist auf der Oberseite der Instrumentenhutze 5 eine Klappe 7 vorgesehen, die in Fig. 1 im geschlossenen Zustand und in Fig. 2 im geöffneten Zustand abgebildet ist. Der geöffnete Zustand ist in Fig. 1 zusätzlich durch die gestrichelten Linien angedeutet, die mit dem Bezugszeichen 7' versehen sind. Die Klappe 7 ist an ihrem fensterseitigen Ende mit einem Klappenscharnier 8 versehen, das weiterhin mit dem Armaturenbrett 2 verbunden ist, so dass die Klappe 7 dadurch geöffnet werden kann, dass sie nach oben und in Richtung auf die Frontscheibe 3 geschwenkt wird.

Durch das Schwenken der Klappe 7 nach oben und in Richtung auf die Frontscheibe 3 wird dem Benutzer der Zugriff zu dem Ablagefach 1 ermöglicht. Das Ablagefach 1 erstreckt sich von dem oberen Rand der Instrumentenhutze 5 schräg in Richtung auf die Frontscheibe 3 und nach unten in das Ablagefach hinein. Bei dem abgebildeten Ausführungsbeispiel ist am frontseitigen oberen Ende des Ablagefachs 1 beispielhaft ein das Ablagefach 1 in diese Richtung begrenzender Luftkanal 9 abgebildet, der sich bei manchen Ausführungsformen eines Armaturenbrettes 2 in Querrichtung des Kraftfahrzeuges erstreckt.

Erfindungsgemäß besteht die Möglichkeit, ein derartiges Ablagefach 1 bzw. eine derartige Klappe 7 über die gesamte Breite einer Instrumentenhutze 5 vorzusehen. Es besteht aber auch die Möglichkeit, nur einen Teil der Breite einer Instrumentenhutze 5 als Ablagefach zu nutzen. Weiterhin sollen von der Erfindung sowohl Instrumentenhutzen 5 umfasst werden, die ein Anzeigeninstrument 4, als auch solche, die zwei oder mehrere Anzeigeinstrumente 4 überdecken. Weiterhin besteht die Möglichkeit, erfindungsgemäß ein Ablagefach 1 vorzusehen, dass keine Klappe 7 aufweist, sondern oben geöffnet ist oder einen anderen Verschluss aufweist.

### BEZUGSZEICHENLISTE

- 1: Ablagefach
- 2: Armaturenbrett
- 3: Frontscheibe
- 4: Anzeigeinstrument
- 5: Instrumentenhutze
- 6: Instrumentenblende
- 7, 7': Klappe
- 8: Klappenschamier
- 9: Luftkanal

## Patentansprüche

1. Anordnung eines Ablagefachs (1) im Armaturenbrett (2) eines Kraftfahrzeugs, wobei in dem Armaturenbrett (2) des Kraftfahrzeugs mindestens ein Anzeigeinstrument (4) angeordnet ist, und wobei oberhalb des mindestens einen Anzeigeinstrumentes (4) an dem Armaturenbrett (2) eine Instrumentenhutze (5) ausgebildet ist, wobei das Ablagefach (1) zumindest abschnittsweise in die Instrumentenhutze (5) integriert ist, **dadurch gekennzeichnet, dass** sich das Ablagefach (1) von der Oberseite der das mindestens eine Anzeigeinstrument (4) oben überragenden Instrumentenhutze (5) als Aussparung in dem Armaturenbrett (2) in dieses hineinerstreckt.

2. Anordnung nach Anspruch 1, **dadurch gekennzeichnet, dass** sich die Instrumentenhutze (5) nach oben und/oder in Richtung auf den Innenraum des Kraftfahrzeugs ein Stück weit von dem Armaturenbrett (2) weg erstreckt.

3. Anordnung nach einem der Ansprüche 1 oder 2, **dadurch gekennzeichnet, dass** sich das Ablagefach (1) von der Oberseite der Instrumentenhutze (5) nach unten und/oder in Richtung auf die Frontscheibe (3) des Kraftfahrzuges in das Armaturenbrett (2) hineinerstreckt.

4. Anordnung nach einem der Ansprüche 1 bis 3, **dadurch gekennzeichnet, dass** die Anordnung eine Klappe (7, 7') umfasst, die das Ablagefach (1) verschließen kann.

5. Anordnung nach Anspruch 4, **dadurch gekennzeichnet, dass** die Klappe (7, 7') an dem Armaturenbrett (2) vermittels eines vorzugsweise als Klappenscharnier (8) ausgeführten Schwenkmittels angelenkt ist.

6. Anordnung nach Anspruch 5, **dadurch gekennzeichnet, dass** die Klappe (7, 7') derart an dem Armaturenbrett (2) angelenkt ist, dass durch Verschwenken der Klappe (7, 7') in Richtung auf die Frontscheibe (3) das Ablagefach (1) geöffnet werden kann.

## Claims

1. Arrangement of a storage compartment (1) in the dashboard (2) of a motor vehicle, the dashboard (2) of the motor vehicle incorporating at least one indicating instrument (4), and an instrument surround (5) being formed on the dashboard (2) above the at least one indicating instrument (4), the storage compartment (1) being integrated, at least in certain sections, in the instrument surround (5), **characterized in that** the storage compartment (1) extends into the dashboard (2), as a clearance therein, from the top side of the instrument surround (5), which projects beyond the at least one indicating instrument (4) at the top.

2. Arrangement according to Claim 1, **characterized in that** the instrument surround (5) extends some distance away from the dashboard (2) in the upward direction and/or in the direction of the interior of the motor vehicle.

3. Arrangement according to either of Claims 1 and 2, **characterized in that** the storage compartment (1) extends into the dashboard (2) in the downward direction from the top side of the instrument surround (5) and/or in the direction of the front windscreen (3) of the motor vehicle.

4. Arrangement according to one of Claims 1 to 3, **characterized in that** the arrangement comprises a flap (7, 7') which can close the storage compartment (1).

5. Arrangement according to Claim 4, **characterized in that** the flap (7, 7') is articulated on the dashboard (2) by a pivoting means preferably configured as a flap hinge (8).

6. Arrangement according to Claim 5, **characterized in that** the flap (7, 7') is articulated on the dashboard (2) such that the storage compartment (1) can be opened by virtue of the flap (7, 7') being pivoted in the direction of the front windscreen (3).

## Revendications

1. Agencement d'un réceptacle de rangement (1) dans le tableau de bord (2) d'un véhicule automobile, dans lequel au moins un instrument indicateur (4) est disposé dans le tableau de bord (2) du véhicule automobile et dans lequel un capot d'instrument (5) est réalisé au-dessus de l'au moins un instrument indicateur (4) sur le tableau de bord (2), le réceptacle de rangement (1) étant intégré au moins en partie dans le capot d'instrument (5), **caractérisé en ce que** le réceptacle de rangement (1) s'étend à l'intérieur du tableau de bord (2) depuis le côté supérieur du capot d'instrument (5) dépassant en haut de l'au moins un instrument indicateur (4), sous forme d'évidement dans le tableau de bord.

2. Agencement selon la revendication 1, **caractérisé en ce que** le capot d'instrument (5) s'étend vers le haut et/ou dans la direction de l'espace interne du véhicule automobile à une certaine distance à l'écart du tableau de bord (2).

3. Agencement selon l'une quelconque des revendications 1 ou 2, **caractérisé en ce que** le réceptacle de rangement (1) s'étend à l'intérieur du tableau de bord (2) depuis le côté supérieur du capot d'instrument (5) vers le bas et/ou dans la direction de la vitre avant (3) du véhicule automobile.

4. Agencement selon l'une quelconque des revendications 1 à 3, **caractérisé en ce que** l'agencement peut comprend un volet (7, 7') qui peut fermer le réceptacle de rangement (1).

5. Agencement selon la revendication 4, **caractérisé en ce que** le volet (7, 7') est articulé au tableau de bord (2) par l'intermédiaire d'un moyen pivotant réalisé de préférence sous la forme d'une charnière à volets (8).

6. Agencement selon la revendication 5, **caractérisé en ce que** le volet (7, 7') est articulé au tableau de bord (2) de telle sorte que par pivotement du volet (7, 7') dans la direction de la vitre avant (3), le réceptacle de rangement (1) puisse être ouvert.
